# EUROPÄISCHE PATENTSCHRIFT

(11) **EP 3 877 672 B1**
(45) Veröffentlichungstag und Bekanntmachung des Hinweises auf die Patenterteilung: **08.11.2023**
(21) Anmeldenummer: 19789580.8
(22) Anmeldetag: 20.09.2019
(51) Int. Cl.: F16H 49/00, F01L 1/344

(54) **WELLGETRIEBE FÜR EINEN ELEKTROMECHANISCHEN NOCKENWELLENVERSTELLER**
HARMONIC DRIVE FOR AN ELECTROMECHANICAL CAMSHAFT ADJUSTER
TRANSMISSION HARMONIQUE POUR UN DÉPHASEUR D'ARBRE À CAMES ÉLECTROMÉCANIQUE

(30) Priorität: 09.11.2018 DE 102018128028
(43) Veröffentlichungstag der Anmeldung: 15.09.2021
(73) Patentinhaber: Schaeffler Technologies AG & Co. KG, 91074 Herzogenaurach (DE)
(72) Erfinder: HAIN, Bastian, 97993 Creglingen (DE)
(86) Internationale Anmeldenummer: PCT/DE2019/100827
(87) Internationale Veröffentlichungsnummer: WO 2020/094174

(56) Entgegenhaltungen:
- EP-A1- 2 927 441
- DE-A1-102016 220 454
- DE-B3-102010 006 392
- US-A1- 2013 019 825
- US-A1- 2015 033 906
- US-B2- 8 584 633

## Beschreibung

Die Erfindung betrifft ein insbesondere in einem elektromechanischen Nockenwellenversteller eines Verbrennungsmotors verwendbares Wellgetriebe.

Wellgetriebe sind in diversen Anwendungsgebieten als Stellgetriebe mit hohem Untersetzungsverhältnis verwendbar und weisen prinzipbedingt ein nachgiebiges Getriebeelement auf. Im einfachsten Fall ist dieses Getriebeelement als Flexring, das heißt als einfacher, typischerweise außenverzahnter Ring, ohne jegliche radial nach innen oder außen gerichtete Fortsätze ausgebildet. Ein Beispiel eines Wellgetriebes mit Flexring ist in der DE 10 2015 210 707 B3 offenbart.

Ebenso sind Wellgetriebe bekannt, in denen das nachgiebige Getriebeelement eine topfförmige Grundform, das heißt die Form einer Hülse mit einem nicht notwendigerweise geschlossenen Boden, hat. In diesem Zusammenhang wird beispielhaft auf die Dokumente DE 10 2017 121 320 B3 und DE 10 2017 109 303 B3 hingewiesen. Im letztgenannten Fall ist dem Wellgetriebe ein Stirnradgetriebe als Vorübersetzungsgetriebe vorgeschaltet.

Weist ein nachgiebiges Getriebeelement eines Wellgetriebes einen radial nach außen gerichteten Flansch auf, so ergibt sich eine Hubform des Getriebeelementes. In einem solchen Fall wird das elastische Getriebeelement auch als Kragenhülse bezeichnet. Ein Beispiel eines Wellgetriebes mit Kragenhülse ist in der DE 10 2017 119 860 A1 beschrieben.

Ein abtriebsseitiges Element und ein antriebsseitiges Element eines Wellgetriebes können durch ein Federelement gegeneinander vorgespannt sein. Beispielsweise ist ein Wellgetriebe mit integrierter Feder in der US 8,584,633 B2 beschrieben. Weitere Wellgetriebe gehen aus DE 10 2016 220 454 A1 und DE 10 2010 006 392 B3 hervor.

In der EP 2 676 011 B1 ist ein Wellgetriebe beschrieben, in welchem eine Schlingfeder als mechanischer Anschlag fungiert, wobei dieser Anschlag zwischen einer Verstellwelle und einer Antriebseinheit des Wellgetriebes angeordnet ist.

Ein Wellgetriebe kann grundsätzlich entweder als Plusgetriebe oder als Minusgetriebe ausgelegt sein. In diesem Zusammenhang wird auf die Dokumente DE 10 2004 009 128 A1 und DE 103 52 361 A1 hingewiesen. Weitere Wellgetriebe gehen aus US 2015/ 033 906 A1, US 2013/ 019 825 A1 oder EP 2 927 441 hervor.

Der Erfindung liegt die Aufgabe zugrunde, ein gegenüber dem genannten Stand der Technik weiterentwickeltes, kompakt und montagefreundlich aufgebautes Wellgetriebe anzugeben, in welches ein zwischen einem Antriebselement und einem Abtriebselement des Wellgetriebes wirksames Federelement integriert ist.

Diese Aufgabe wird erfindungsgemäß gelöst durch ein Wellgetriebe mit den Merkmalen des Anspruchs 1. Dieses Wellgetriebe umfasst ein innenverzahntes Gehäuseelement, ein topfförmiges, im Gehäuseelement gelagertes Abtriebselement, sowie ein ebenfalls topfförmiges, mit dem Abtriebselement verbundenes, nachgiebiges Getriebeelement. Dieses Getriebeelement, welches auch als Verzahnungstopf bezeichnet wird, weist eine mit der Innenverzahnung des Gehäuseelementes kämmende Außenverzahnung auf. Weiter ist ein Federelement vorgesehen, welches zwischen dem Gehäuseelement und dem Abtriebselement wirksam ist. Das Federelement ist in einem Ringraum innerhalb des Wellgetriebes angeordnet, welcher radial nach innen durch einen Hülsenabschnitt,das heißt Abschnitt mit zylindrischer Grundform, des nachgiebigen Getriebeelementes, radial nach außen durch einen zylindrischen Abschnitt des Abtriebselementes, und in Axialrichtung einerseits durch eine ringscheibenförmige Fläche des Gehäuseelementes und andererseits durch einen Boden des Abtriebselementes begrenzt ist.

In bevorzugter Ausgestaltung handelt es sich bei dem Federelement um eine Torsionsfeder. Die Torsionsfeder weist vorzugsweise eine Mehrzahl an in dem genannten Ringraum liegenden Windungen, vorzugsweise mindestens drei Windungen, sowie zwei jeweils in Axialrichtung des Wellgetriebes ausgerichtete Federenden auf, welche in Aufnahmekonturen, das heißt Bohrungen, des Antriebselementes beziehungsweise des Abtriebselementes eingreifen.

Gemäß einer vorteilhaften Weiterbildung weist das Abtriebselement Konturen einer Verdrehwinkelbegrenzung auf, die den Verstellbereich des Abtriebselementes gegenüber dem Antriebselement begrenzt. Die genannten Konturen befinden sich vorzugsweise am Rand des zylindrischen Bereichs des insgesamt topfförmigen Abtriebselementes und wirken entweder direkt mit dem Antriebselement oder mit Konturen eines mit dem Antriebselement fest verbundenen Elementes zusammen.

Beim topfförmigen Getriebeelement, das heißt Verzahnungstopf, handelt es typischerweise sich um ein im Vergleich zum Antriebselement und zum Abtriebselement dünnwandiges Bauteil. Ein weiteres dünnwandiges Bauteil, nämlich Blechteil, liegt in bevorzugter Ausgestaltung in Form eines Sicherungstopfes vor, welcher in den Verzahnungstopf derart eingesetzt ist, dass er eine axiale Sicherungsfunktion gegenüber einem zur Verformung des Verzahnungstopf vorgesehenen Wellgenerator übernimmt.

Der Sicherungstopf kann hierbei fest mit dem Boden des Abtriebselementes verbunden sein. Auf der dem Boden des Abtriebselementes gegenüberliegenden Stirnseite des nachgiebigen, topfförmigen Getriebeelementes, das heißt auf der offenen Seite des Verzahnungstopfes, ist eine axiale Sicherungsfunktion gegenüber dem Wellgenerator vorzugsweise unmittelbar durch eine Kontur des Antriebselementes gegeben.

Diese Kontur kann in Form einer ringscheibenförmigen Fläche vorliegen. Von dieser Fläche ist die weitere, davon räumlich getrennte, bereits im Zusammenhang mit Anspruch 1 genannte ringscheibenförmige Fläche zu unterscheiden, welche den Aufnahmeraum der Feder, insbesondere Torsionsfeder, begrenzt.

Die letztgenannte ringscheibenförmige Fläche bildet in vorteilhafter Ausgestaltung zugleich eine Axiallagerfläche gegenüber dem Abtriebselement. Sofern eine Verdrehwinkelbegrenzung zwischen dem Abtriebselement und dem Antriebselement vorgesehen ist, kann die Axiallagerfläche durch mindestens ein antriebsseitiges Anschlagelement, welches als integraler Bestandteil des Antriebselementes ausgebildet ist, unterbrochen sein. Weiterhin kann die Axiallagerfläche durch eine Öffnung unterbrochen sein, in welche ein Ende des Federelementes eingehängt ist.

Bei Verwendung des Wellgetriebes in einem elektromechanischen Nockenwellenversteller ist das Antriebselement vorzugsweise als Getriebeelement eines Umschlingungsgetriebes, das heißt als Riemenrad oder Kettenrad, ausgebildet. Insgesamt weist das Antriebselement hierbei eine Topfform auf, wobei die offene Seite des Topfes mit der Abtriebsseite des Wellgetriebes, das heißt der der zu verstellenden Nockenwelle zugewandten Seite des Wellgetriebes, identisch ist. Die gegenüberliegende Stirnseite des Wellgetriebes wird als Frontseite bezeichnet und weist einen nicht geschlossenen Boden auf. Durch diesen Boden hindurch ist eine typischerweise elektrisch angetriebene Welle hindurchgeführt, mit welcher, optional über eine Ausgleichskupplung, der Wellgenerator des Wellgetriebes betätigt wird.

Das für die Verwendung als Stellgetriebe eines elektromechanischen Nockenwellenverstellers vorgesehene Wellgetriebe ist vorzugsweise in Auslegung als Minusgetriebe für die Verstellung einer Auslassnockenwelle eines Verbrennungsmotors vorgesehen.

Generell handelt es sich bei einem Wellgetriebe um ein Dreiwellengetriebe. Hierbei stellt das Antriebselement eine erste Welle und das Abtriebselement eine zweite Welle dar. Eine dritte Welle ist in Form eines rotierenden Elementes, in der Regel Lagerinnenrings, des Wellgenerators gegeben. Solange diese dritte Welle, welche zur Verstellung des Wellgetriebes vorgesehen ist, mit derselben Drehzahl wie das Antriebselement rotiert, dreht sich auch das Abtriebselement mit dieser Drehzahl. Dies gilt sowohl für ein Plusgetriebe als auch für ein Minusgetriebe.

Die Auslegung des erfindungsgemäßen Wellgetriebes als Minusgetriebe bedeutet, dass ein Abbremsen der dritten Welle in Relation zum Antriebselement in ein Vorauseilen des Abtriebselementes gegenüber dem Antriebselement umgesetzt wird. In analoger Weise bedeutet eine Erhöhung der Drehzahl der zur Verstellung genutzten dritten Welle im Vergleich zur Drehzahl des Antriebselementes eine Verstellung des Abtriebselementes gegenüber dem Antriebselement, welche der Drehrichtung des Antriebselementes entgegengesetzt ist. Die Auslegung des Wellgetriebes als Minusgetriebe mit hat insbesondere den Vorteil, dass auf einfache Weise eine definierte Fail-Safe-Stellung des Wellgetriebes erreichbar ist.

Beim Gehäuseelement des Wellgetriebes handelt es sich nicht notwendigerweise um ein rotierendes Element. Vielmehr kann das Gehäuseelement auch drehfest in eine Umgebungskonstruktion eingebaut sein. Dies ist beispielsweise der Fall, wenn das Wellgetriebe zur Verstellung einer Exzenterwelle genutzt wird, über die das Verdichtungsverhältnis eines Hubkolbenmotors variiert wird.

Auch für industrielle Anwendungen, beispielsweise als Stellgetriebe in Werkzeugmaschinen oder Robotern, ist das Wellgetriebe geeignet.

Nachfolgend wird ein Ausführungsbeispiel der Erfindung anhand einer Zeichnung näher erläutert. Hierin zeigen:

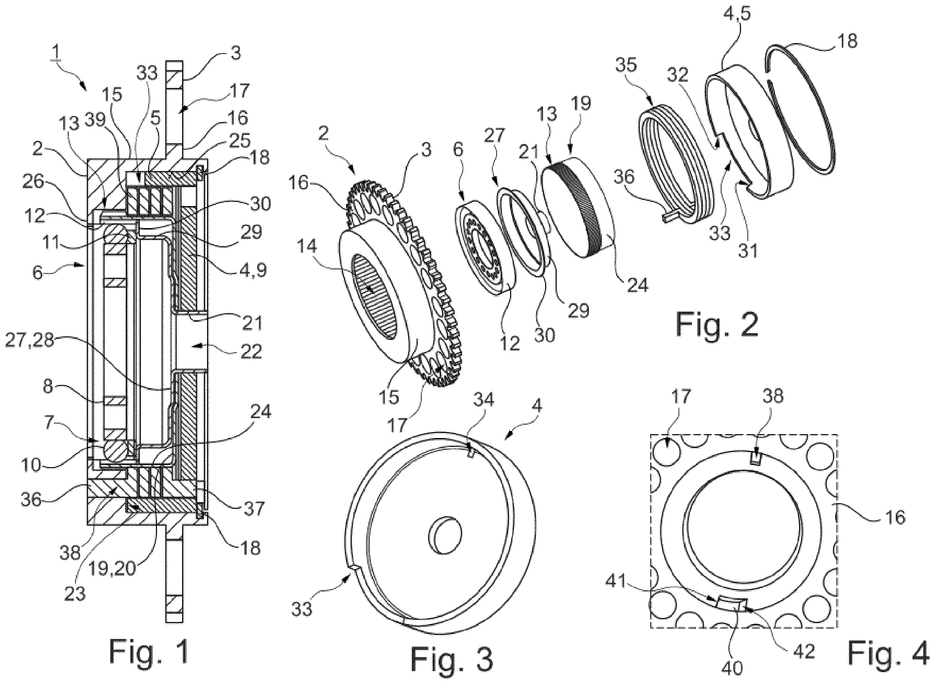

- Fig. 1: ein Wellgetriebe in Schnittdarstellung,
- Fig. 2: das Wellgetriebe in Explosionsdarstellung,
- Fig. 3: ein Abtriebselement des Wellgetriebes in perspektivischer Ansicht,
- Fig. 4: ein Detail eines Antriebselements des Wellgetriebes.

Ein insgesamt mit dem Bezugszeichen 1 gekennzeichnetes Wellgetriebe kommt als Stellgetriebe eines elektromechanischen Nockenwellenverstellers zum Einsatz. Das Wellgetriebe 1 dient der Verstellung einer Auslassnockenwelle eines Verbrennungsmotors. Hinsichtlich der prinzipiellen Funktion des Wellgetriebes 1 wird auf den eingangs zitierten Stand der Technik verwiesen.

Das Wellgetriebe 1 weist ein Gehäuseelement 2 auf, welches einstückig mit einem Kettenrad 3 ausgebildet ist. Das Gehäuseelement 2 einschließlich des Kettenrades 3 wird kurz auch als Gehäuse des Wellgetriebes 1 bezeichnet. Das Gehäuse hat eine zylindrische Grundform, wobei sich die Innenumfangsfläche des Gehäuses zur Abtriebsseite des Wellgetriebes 1 hin gestuft aufweitet.

In dem Kettenrad 3, welches als Getriebeelement eines Umschlingungsgetriebes, nämlich Kettengetriebes, in an sich bekannter Weise über die Kurbelwelle des Verbrennungsmotors angetrieben wird, ist ein Abtriebselement 4 gelagert. Das Abtriebselement 4 ist von der abtriebsseitigen Stirnseite des Wellgetriebes 1 aus in das Gehäuseelement 2 eingesetzt und mit Hilfe eines Sicherungsrings 18 in Axialrichtung gesichert. In der entgegengesetzten Axialrichtung läuft das Abtriebselement 4 an eine ringscheibenförmige Axiallagerfläche 23 an, welche unmittelbar durch das Gehäuseelement 2 gebildet ist und allgemein als ringscheibenförmige Fläche 23 bezeichnet wird.

Durch das Gehäuseelement 2 ist ferner eine Radiallagerfläche 25 gebildet, in welche der mit 5 bezeichnete zylindrische Abschnitt des Abtriebselements 4 eingesetzt und damit in Radialrichtung gelagert ist. An den zylindrischen Abschnitt 5 schließt sich ein Boden 9 des Abtriebselements 4 an, welcher eine mittige Öffnung 22 aufweist. Im eingebauten Zustand des Wellgetriebes 1 ist durch die Öffnung 22 eine nicht dargestellte Zentralschraube durchgesteckt, mit welcher die abtriebsseitigen Komponenten des Wellgetriebes 1 an der zu verstellenden Nockenwelle befestigt sind.

In dem vom Gehäuse umschlossenen Innenraum des Wellgetriebes 1 befindet sich ein Wellgenerator 6, welcher in an sich bekannter Weise ein als Kugellager ausgebildetes Wälzlager 7 umfasst. Ein Innenring 8 des Wälzlagers 7 wird - optional über eine nicht dargestellte Ausgleichskupplung - mittels eines nicht dargestellten Elektromotors angetrieben. Der Innenring 8 weist eine nicht kreisrunde, elliptische Außenumfangsfläche auf, auf welcher Kugeln 10 als Wälzkörper abrollen. Die Kugeln 10, welche in einem Käfig 11 geführt sind, kontaktieren einen Außenring 12, der im Gegensatz zum Innenring 8 nachgiebig ist.

Der Außenring 12 des Wellgenerators 6 ist innerhalb eines nachgiebigen Getriebeelements 19 in Form eines Verzahnungstopfes angeordnet, welcher allgemein auch als elastisches Getriebeelement bezeichnet wird. Hierbei umgibt ein mit einer Außenverzahnung 13 versehener Bereich des nachgiebigen Getriebeelements 19 den Außenring 12. Die Außenverzahnung 13 ist Teil eines Hülsenabschnitts 24 des nachgiebigen Getriebeelements 19. Durch die nicht kreisrunde Form des Innenrings 8 wird die Außenverzahnung 13 an zwei einander diametral gegenüberliegenden Stellen in eine Innenverzahnung 14 gezwungen, welche durch das Gehäuseelement 2 gebildet ist. Die Anzahl der Zähne der Außenverzahnung 13 ist geringfügig, nämlich um zwei, geringer als die Anzahl der Zähne der Innenverzahnung 14. Dies führt dazu, dass eine volle Umdrehung des Innenrings 8 in Relation zum Gehäuseelement 2 in eine vergleichsweise geringe Verschwenkung zwischen dem Gehäuseelement 2 und dem Abtriebselement 4 umgesetzt wird. Bei einer Drehung des Innenrings 8 gegenüber dem Gehäuseelement 2, das heißt Antriebselement des Wellgetriebes 1, nach rechts wird das Abtriebselement 4 gegenüber dem Gehäuseelement 2 nach links verdreht und umgekehrt. Das Wellgetriebe 1 ist damit als Minusgetriebe konzipiert.

Der mit 20 bezeichnete Boden des nachgiebigen Getriebeelementes 19 ist in seinem inneren Bereich fest mit dem vergleichsweise massiven, eine wesentlich größere Wandstärke aufweisenden Boden 9 des Abtriebselementes 4 verbunden. Ebenso ist mit dem Boden 9 des Abtriebselementes 4 ein Sicherungstopf 27 verbunden, bei welchem es sich, ebenso wie bei dem nachgiebigen Getriebeelement 19, um ein dünnwandiges Blechteil handelt. Der Sicherungstopf 27 weist einen Scheibenabschnitt 28 auf, welcher dem Boden 20 des nachgiebigen Getriebeelements 19 unmittelbar vorgesetzt ist und zusammen mit diesem mit Hilfe der bereits erwähnten Zentralschraube an der Nockenwelle befestigt ist. Der Scheibenabschnitt 28 geht an seinem inneren Rand in einen Zapfen 21 über, welcher die Öffnung 22 begrenzt.

Der radial äußere Rand des Scheibenabschnitts 28 geht in einen Hülsenabschnitt 29 des Sicherungstopfes 27 über, welcher radial innerhalb des Hülsenabschnitts 24 des nachgiebigen Getriebeelements 19 angeordnet und konzentrisch zu diesem ausgerichtet ist. An den dem Scheibenabschnitt 28 abgewandten Rand des Hülsenabschnitts 29 wiederum schließt ein radial nach außen gerichteter Flansch 30 des Sicherungstopfes 27 an, welcher einen Axialanschlag gegenüber dem Außenring 12 und damit gegenüber dem gesamten Wellgenerator 6 darstellt.

Ein Axialanschlag gegenüber dem Wellgenerator 6 in der entgegengesetzten Richtung, das heißt zur Frontseite des Wellgetriebes 1 hin, ist durch einen Innenbord 26 gebildet, welcher Bestandteil des Gehäuseelementes 2 ist. Aufgrund des Innenbordes 26 kann der Wellgenerator 6 ebenso wie das nachgiebige Getriebeelement 19 ausschließlich von der abtriebsseitigen Stirnseite des Wellgetriebes 1 aus in das Gehäuseelement 2 eingesetzt werden. An den Innenbord 26 schließt der mit der Innenverzahnung 14 versehene, hohlzylindrische Abschnitt des Gehäuseelementes 2 an. An diesen Abschnitt wiederum schließt die ringscheibenförmige Fläche 23 an, welche unter anderem als Axiallagerfläche gegenüber dem Abtriebselement 4 fungiert.

Die Innenverzahnung 14 befindet sich ebenso wie ein an die Axiallagerfläche 23 anschließender, vergleichsweise dünnwandiger Abschnitt des Gehäuseelementes 2 in einem insgesamt mit 15 bezeichneten zylindrischen Abschnitt des Gehäuses 2. Aus dem zylindrischen Abschnitt 15 ragt radial nach außen ein mit 16 bezeichneter Scheibenabschnitt heraus, welcher als Kettenrad 3 ausgebildet ist und zahlreiche Öffnungen 17 aufweist, die der Einsparung von Gewicht und Massenträgheitsmoment des drehbaren Gehäuseelementes 2 dienen.

Am zylindrischen Abschnitt 5 des Abtriebselements 4 sind Umfangsanschläge 31, 32 erkennbar, welche einer Verdrehwinkelbegrenzung 33 zuzurechnen sind. Die Verdrehwinkelbegrenzung 33 umfasst ferner einen Anschlagblock 40, welcher durch das Gehäuseelement 2 gebildet ist und Anschlagflächen 41, 42 aufweist, die mit den Umfangsanschlägen 31, 32 zusammenwirken. Durch die Verdrehwinkelbegrenzung 33 ist der Schwenkbereich des Abtriebselements 4 gegenüber dem Gehäuseelement 2 und damit der Verstellbereich des Wellgetriebes 1 begrenzt.

Das Abtriebselement 4 ist gegenüber dem Gehäuseelement 2 durch ein Federelement 35, nämlich eine Torsionsfeder, vorgespannt. Das Federelement 35 weist eine Mehrzahl, im Ausführungsbeispiel vier, an Windungen 39 auf, welche in einem Ringraum radial außerhalb des Hülsenabschnitts 24 sowie radial innerhalb des zylindrischen Abschnitts 5 des Abtriebselementes 4 angeordnet sind. Stirnseitig ist der Ringraum, in welchem sich die Windungen 39 befinden, einerseits durch die ringscheibenförmige Fläche 23 und andererseits durch den Boden 9 des Abtriebselementes 4 begrenzt. Die mit 36 und 37 bezeichneten Federenden des Federelementes 35 sind in Axialrichtung des Wellgetriebes 1 ausgerichtet und greifen in eine Bohrung 38 im Gehäuseelement 2 beziehungsweise in eine Bohrung 34 am Rand des Bodens 9 des Abtriebselementes 4 ein. Bei der Montage des Wellgetriebes 1 wird das Federelement 35 zusammen mit dem Abtriebselement 4 in das Gehäuseelement 2 eingesetzt.

### Bezugszeichenliste

- 1: Wellgetriebe
- 2: Gehäuseelement
- 3: Kettenrad
- 4: Abtriebselement
- 5: zylindrischer Abschnitt
- 6: Wellgenerator
- 7: Wälzlager
- 8: Innenring
- 9: Boden
- 10: Kugel
- 11: Käfig
- 12: Außenring
- 13: Außenverzahnung
- 14: Innenverzahnung
- 15: zylindrischer Abschnitt
- 16: Scheibenabschnitt
- 17: Bohrung
- 18: Sicherungsring
- 19: nachgiebiges Getriebeelement
- 20: Boden
- 21: Zapfen
- 22: Öffnung
- 23: Axiallagerfläche, ringscheibenförmige Fläche
- 24: Hülsenabschnitt
- 25: Radiallagerfläche
- 26: Innenbord
- 27: Sicherungstopf
- 28: Scheibenabschnitt
- 29: Hülsenabschnitt
- 30: Flansch
- 31: Umfangsanschlag
- 32: Umfangsanschlag
- 33: Verdrehwinkelbegrenzung
- 34: Bohrung
- 35: Federelement, Torsionsfeder
- 36: Federende
- 37: Federende
- 38: Bohrung
- 39: Windung
- 40: Anschlagblock
- 41: Anschlagfläche
- 42: Anschlagfläche

## Patentansprüche

1. Wellgetriebe (1), mit einem innenverzahnten Gehäuseelement (2), einem topfförmigen, im Gehäuseelement (2) gelagerten Abtriebselement (4), sowie einem ebenfalls topfförmigen, mit dem Abtriebselement (4) verbundenen, nachgiebigen Getriebeelement (19), welches eine mit einer Innenverzahnung (14) des Gehäuseelementes (2) kämmende Außenverzahnung (13) aufweist, **gekennzeichnet durch** ein zwischen dem Gehäuseelement (2) und dem Abtriebselement (4) wirksamen Federelement (35), welches in einem Ringraum angeordnet ist, der radial nach innen durch einen Hülsenabschnitt (24) des nachgiebigen Getriebeelementes (19), radial nach außen durch einen zylindrischen Abschnitt (5) des Abtriebselementes (4), und in Axialrichtung einerseits durch eine ringscheibenförmige Fläche (23) des Gehäuseelementes (2) und andererseits durch einen Boden (9) des Abtriebselementes (4) begrenzt ist.

2. Wellgetriebe (1) nach Anspruch 1, **dadurch gekennzeichnet, dass** das Federelement (35) als Torsionsfeder ausgebildet ist.

3. Wellgetriebe (1) nach Anspruch 2, **dadurch gekennzeichnet, dass** die Torsionsfeder (35) eine Mehrzahl an Windungen (39) aufweist.

4. Wellgetriebe (1) nach Anspruch 3, **dadurch gekennzeichnet, dass** die Torsionsfeder (35) in Axialrichtung des Gehäuseelementes (2) sowie des Abtriebselementes (4) ausgerichtete Federenden (36,37) aufweist, welche in Bohrungen (38,34) des Gehäuseelementes (2) beziehungsweise des Abtriebselementes (4) gehalten sind.

5. Wellgetriebe (1) nach einem der Ansprüche 1 bis 4, **dadurch gekennzeichnet, dass** das Abtriebselement (4) Konturen (31,32) einer Verdrehwinkelbegrenzung (33) aufweist.

6. Wellgetriebe (1) nach einem der Ansprüche 1 bis 5, **gekennzeichnet durch** einen in das nachgiebige Getriebeelement (19) eingesetzten Sicherungstopf (27), welcher als Axialsicherungselement gegenüber einem zur Verformung des nachgiebigen Getriebeelementes (19) vorgesehenen Wellgenerator (6) fungiert.

7. Wellgetriebe (1) nach einem der Ansprüche 1 bis 6, **dadurch gekennzeichnet, dass** die ringscheibenförmige Fläche (23) des Gehäuseelementes (2) als Axiallagerfläche gegenüber dem Abtriebselement (4) vorgesehen ist.

8. Wellgetriebe (1) nach einem der Ansprüche 1 bis 7, **dadurch gekennzeichnet, dass** das Gehäuseelement (2) einstückig mit einem Kettenrad (3) ausgebildet ist.

9. Wellgetriebe (1) nach einem der Ansprüche 1 bis 8, **dadurch gekennzeichnet, dass** dieses als Minusgetriebe ausgebildet ist.

10. Verwendung eines Wellgetriebes (1) nach Anspruch 9 in einem elektromechanischen Nockenwellenversteller.

## Claims

1. A harmonic drive (1), having an internally toothed housing element (2), a pot-shaped output element (4) mounted in the housing element (2), and a likewise pot-shaped, resilient drive element (19) connected to the output element (4) and having an external toothing system (13) which meshes with the internal toothing system (14) of the housing element (2), **characterised by** a spring element (35) that is active between the housing element (2) and the output element (4) which is arranged in an annular space delimited radially on the inside by a sleeve section (24) of the resilient drive element (19), radially on an outside by a cylindrical section (5) of the output element (4), and in an axial direction by an annular disc-shaped surface (23) of the housing element (2) and by a bottom (9) of the output element (4).

2. The harmonic drive (1) according to claim 1, **characterised in that** the spring element (35) is formed as a torsion spring.

3. The harmonic drive (1) according to claim 2, **characterised in that** the torsion spring (35) has a plurality of coils (39).

4. The harmonic drive (1) according to claim 3, **characterised in that** the torsion spring (35) has spring ends (36, 37) which are aligned in the axial direction of the housing element (2) and of the output element (4) and which are held in bores (38, 34) in the housing element (2) or the output element (4).

5. The harmonic drive (1) according to any one of claims 1 to 4, **characterised in that** the output element (4) has contours (31, 32) that provide a rotation angle limitation (33).

6. The harmonic drive (1) according to any one of claims 1 to 5, **characterised by** a securing pot (27) that is inserted into the resilient drive element (19) and acts as an axial securing element with respect to a wave generator (6) provided for deforming the resilient drive element (19).

7. The harmonic drive (1) according to any one of claims 1 to 6, **characterised in that** the annular disc-shaped surface (23) of the housing element (2) is provided as an axial bearing surface opposite the output element (4).

8. The harmonic drive (1) according to any one of claims 1 to 7, **characterised in that** the housing element (2) is formed integrally with a chain wheel (3).

9. The harmonic drive (1) according to any one of claims 1 to 8, **characterised in that** it is formed as a minus gear unit.

10. A use of a harmonic drive (1) according to claim 9 in an electromechanical camshaft adjuster.

## Revendications

1. Transmission harmonique (1), comportant un élément de boîtier (2) à denture intérieure, un élément entraîné (4) en forme de pot, monté dans l'élément de boîtier (2), ainsi qu'un élément de transmission flexible (19), également en forme de pot, relié à l'élément entraîné (4), qui présente une denture extérieure (13) s'engrènant avec une denture intérieure (14) de l'élément de boîtier (2), **caractérisée par** un élément de ressort (35) agissant entre l'élément de boîtier (2) et l'élément entraîné (4), qui est disposé dans un espace annulaire limité radialement vers l'intérieur par une section de douille (24) de l'élément de transmission flexible (19), radialement vers l'extérieur par une section cylindrique (5) de l'élément entraîné (4), et en direction axiale d'une part par une surface en forme de disque annulaire (23) de l'élément de boîtier (2) et d'autre part par un fond (9) de l'élément entraîné (4).

2. Transmission harmonique (1) selon la revendication 1, **caractérisée en ce que** l'élément de ressort (35) est réalisé sous la forme d'un ressort de tension.

3. Transmission harmonique (1) selon la revendication 2, **caractérisée en ce que** le ressort de torsion (35) comporte plusieurs spires (39).

4. Transmission harmonique (1) selon la revendication 3, **caractérisée en ce que** le ressort de torsion (35) présente des extrémités de ressort (36, 37) alignées dans la direction axiale de l'élément de boîtier (2) et de l'élément entraîné (4) et maintenues dans des alésages (38, 34) de l'élément de boîtier (2) ou de l'élément entraîné (4).

5. Transmission harmonique (1) selon l'une quelconque des revendications 1 à 4, **caractérisée en ce que** l'élément entraîné (4) présente des contours (31, 32) d'une limitation d'angle de torsion (33).

6. Transmission harmonique (1) selon l'une quelconque des revendications 1 à 5, **caractérisée par** une calotte d'arrêt (27) insérée dans l'élément de transmission flexible (19) qui agit comme élément de sécurité axial par rapport à un générateur de transmission (6) prévu pour déformer l'élément de transmission flexible (19).

7. Transmission harmonique (1) selon l'une quelconque des revendications 1 à 6, **caractérisée en ce que** la surface en forme de disque annulaire (23) de l'élément de boîtier (2) est prévue comme surface d'appui axiale opposée à l'élément de sortie (4).

8. Transmission harmonique (1) selon l'une quelconque des revendications 1 à 7, **caractérisée en ce que** l'élément de boîtier (2) est formé d'une seule pièce avec une roue dentée (3).

9. Transmission harmonique (1) selon l'une quelconque des revendications 1 à 8, **caractérisée en ce qu'**elle est formée comme un engrenage négatif.

10. Utilisation d'une transmission harmonique (1) selon la revendication 9 dans un déphaseur d'arbre à cames électromécanique.
